# EUROPEAN PATENT SPECIFICATION

(11) **EP 2 100 491 B1**
(45) Date of publication and mention of the grant of the patent: **22.06.2011**
(21) Application number: 09154879.2
(22) Date of filing: 11.03.2009
(51) Int. Cl.: A01B 33/08, A01B 33/02

(54) **Improved agricultural machine**
Verbesserte Landwirtschaftsmaschine
Machine agricole améliorée

(30) Priority: 14.03.2008 IT MI20080439
(43) Date of publication of application: 16.09.2009
(73) Proprietor: BCS S.p.A., 20123 Milano (MI) (IT)
(72) Inventor: Castoldi, Fabrizio, 20145, Milano MI (IT); Omodeo Vanone, Fabrizio, 27036, Mortara PV (IT)
(74) Representative: Branca, Emanuela

(56) References cited:
- CA-A1- 2 465 628
- FR-A- 935 565
- US-A- 4 286 670
- US-A- 5 896 931

## Description

The present invention refers to an improved agricultural machine.

In particular by the terms "agricultural machine", we refer to a machine comprising a motor, generally an internal combustion engine running on petrol or on a Diesel cycle, a clutch, a gear box, an axle provided with wheels, a motorcycle style handlebar, provided with the controls needed for the various actuations, and a power socket connected to a tool which one wishes to use.

As an example, in the case in which such a tool is a milling cutter suitable for hoeing the ground, the machine is called "tilling machine", otherwise, in the case in which the tool is a mowing blade, these machines are called "mowing machines".

Furthermore in the case in which the aforementioned handlebar is mobile with respect to the power socket, allowing the operator to work in a "tilling machine" or in a "mowing machine" configuration, these machines are also called "reversible".

Current regulations, for safety reasons, impose that, in the case in which the operator abandons the handlebars, the machine must stop within a very short lapse of time. Nowadays, this result is achieved with a "safety" lever, placed on the handlebar, which the operator must keep pushed while the relative machine is in use.

In particular, such a lever is connected to the endothermic engine so that, when it is released, it makes the machine turn off.

Nevertheless, disadvantageously the turning off of the motor in the case in which the aforementioned "safety" lever is released does not happen immediately due to the inertia of the motor as well as that of the connected kinematisms.

A consequence of this fact is that the machine can continue to move even after the handlebars have been abandoned by the driver creating a potentially dangerous situation for the user.

Another limit of the current solution described above lies in the fact that, after abandoning the handlebars, and having therefore started the process of halting the motor, in order to continue the work the operator must restart the motor already turned off.

Most motors of this kind are turned on manually and the starting action is not always easy due to the necessary strain.

This may lead to the operator tampering with the safety device, avoiding in this way the turning off of the motor and the burden of the following re-start, consequently lowering the safety of the machine considerably.

Another limit of the configuration currently in use and previously described is that it especially affects machines equipped with a gearbox and with oil bathed gear trains. Indeed, in these particular geared machines the movement is transmitted through a mechanically actuated clutch through which all the available power passes.

In order to contain the gauge of the machine, reducing the transversal bulk and allowing the performance of particular agricultural work, the diameter of such a clutch is quite small in relation to the power to be transmitted.

Such a limited available volume often makes it necessary to use dry-operating conical clutches with rapid actuation and with noticeable heat removal problems.

Nowadays, to reduce the start up transients, which cause overheating especially in high inertia tools, very stiff springs are often used which make a mechanical control of the clutch tiring and poorly ergonomic due to the manual lowering of a lever directly connected to the clutch itself.

Finally the wearing is often premature and frequent adjustments of the controls are needed. FR 935565 discloses an agricultural machine comprising a motor, an axle equipped with two wheels, a handlebar and a power socket, said agricultural machine also comprising a clutch group arranged between the motor and the axle and control levers of the clutch group associated with the handlebar.

The purpose of the present invention is that of making a device able to overcome the aforementioned drawbacks of the prior art in an extremely simple, cost-effective and particularly functional way.

Another purpose is that of making a high safety improved agricultural machine in which, when the user abandons the handlebars during use, the machine stops suddenly keeping the motor turned on.

Yet another purpose is that of being able to have an improved agricultural machine in which the actuation of the controls at the handlebars does not require strain on the user a part from minimal proportions.

Yet another purpose is that of being able to have an improved agricultural machine in which there is a safety mechanism for restarting the machine following the abandoning of the handlebars.

These purposes according to the present invention are achieved by making an improved agricultural machine as outlined in claim 1.

Further characteristics of the invention are highlighted in the subsequent claims.

The characteristics and the advantages of an improved agricultural machine according to the present invention shall become clearer from the following description, given as an example and not for limiting purposes, referring to the attached schematic drawings in which:
Figure 1 is a top side view of an improved agricultural machine according to the present invention;
Figure 2 is a view from above of the improved agricultural machine of figure 1;
Figure 3 is a top side view of another improved agricultural machine according to the present invention;
Figure 4 is a view from above of the improved agricultural machine of figure 3;
Figure 5 is a vertical section view of a clutch group belonging to the improved agricultural machines according to the present invention;
Figure 5B is a partially sectioned perspective view of the clutch group of figure 5;
Figure 6 is a horizontal section view of the clutch group of figure 5;

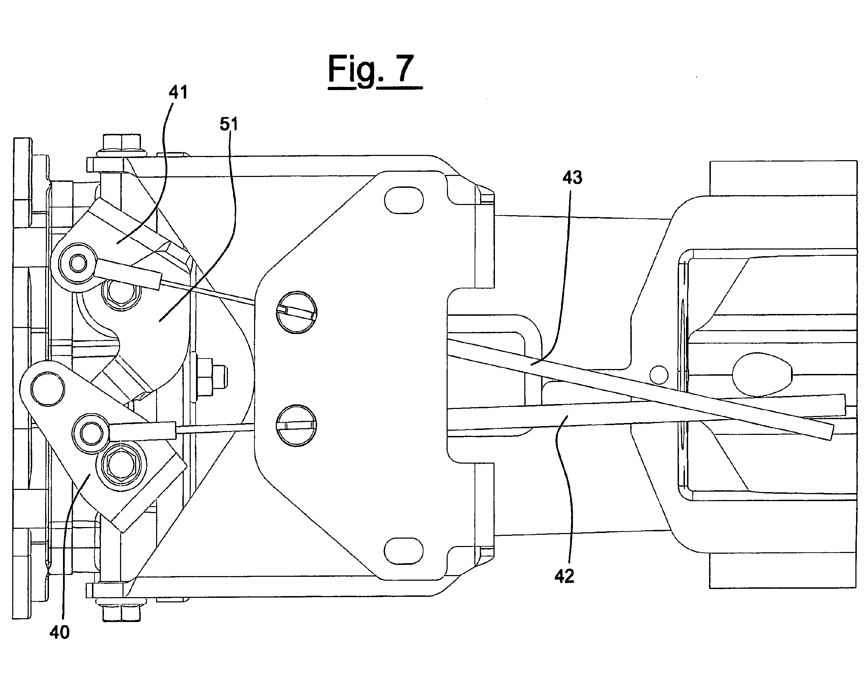

Figure 7 is a schematic view of other elements of the improved agricultural machines according to the present invention; and

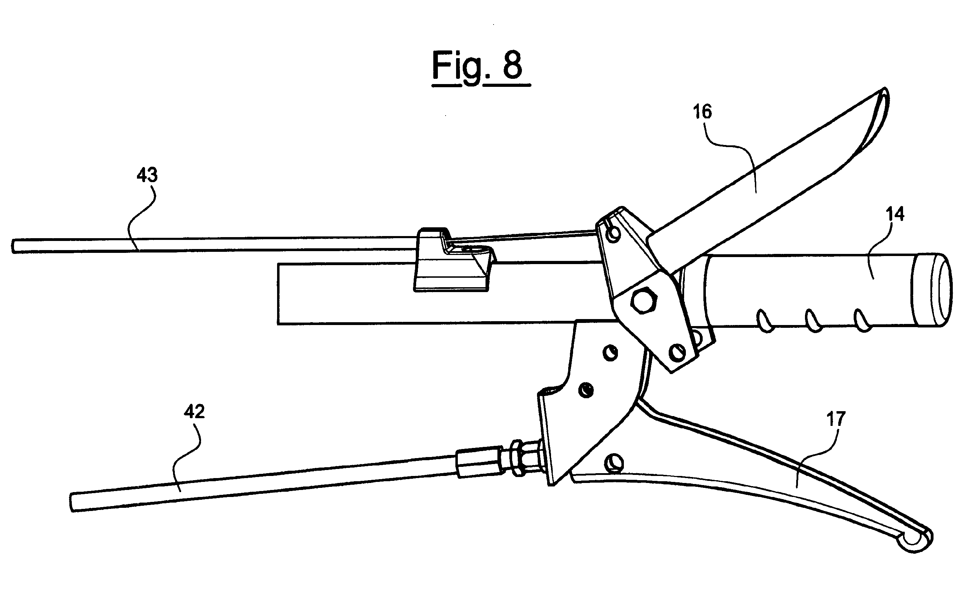

Figure 8 is a schematic view of other elements of the improved agricultural machines according to the present invention.

With reference to the figures, an improved agricultural machine according to the present invention is shown with reference numerals 10, 10'.

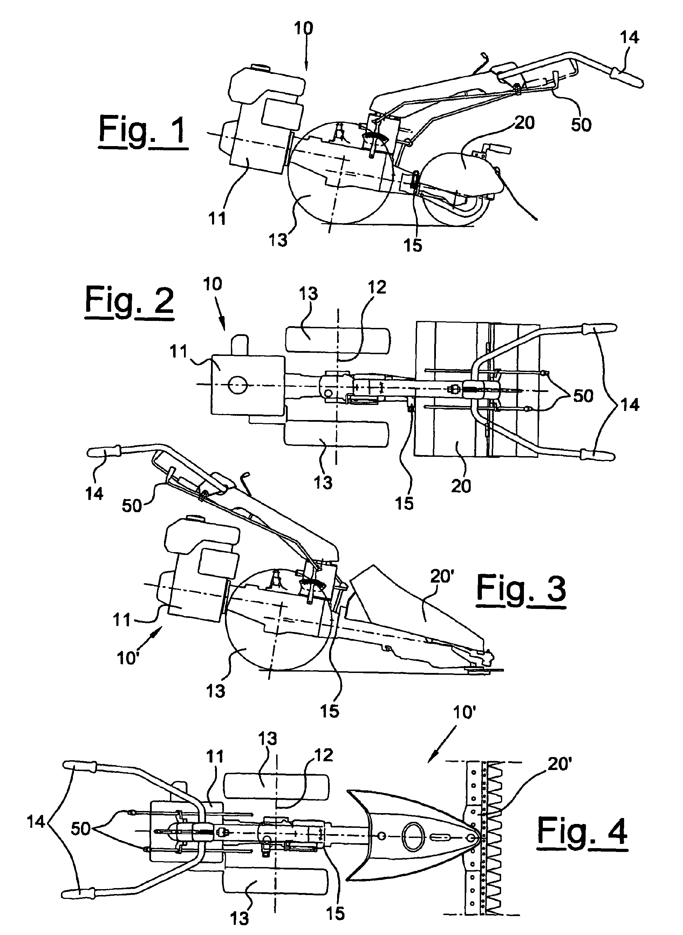

As can be seen in figures 1-4, such an agricultural machine 10, 10' comprises a motor 11 for dispensing power, at least one axle 12 provided with two wheels 13, a handlebar 14 and a power socket 15.

Furthermore the agricultural machine 10, 10' comprises a hydromechanical clutch group 20 arranged between the motor 11 and the at least one axle 12, a first "safety" lever 16 and a second "clutch" lever 17.

In particular both the aforementioned "safety" lever 16 and "clutch" lever 17 are associated with the handlebar 14 in a proximal position to that foreseen for the hands of the user using the machine 10, 10' and are control levers and levers for selectively actuating the hydromechanical clutch group 20.

Preferably the agricultural machine 10, 10' according to the present invention also comprises a gearbox 51 arranged between the hydromechanical clutch group 20 and the axle 12 as well as the control means 50, of the motor 11 and of the gearbox 51, also located at the handlebar 14.

In particular the agricultural machine 10, 10' can comprise a tool 200, 200' associated with the power socket 15. According to two embodiments the aforementioned tool 200, 200' can comprise a milling cutter 200 suitable for hoeing the ground, in which case the agricultural machine 10, 10' is a tilling machine 10 as shown in figures 1 and 2, and alternatively the tool 200, 200' can comprise mowing blades 2001 and in this case the agricultural machine 10, 10' is a mowing machine 10' as shown in figures 3 and 4.

Furthermore, advantageously, the handlebar 14, generally motorcycle style handlebar, can be orientated as desired with respect to the power socket 15 according to the tool 200, 200' one wishes to use.

As mentioned at the beginning of the description the agricultural machine 10, 10' comprises a hydromechanical clutch group 20 which is equipped with a first clutch group, associated with the drive shaft 23, and a second clutch group directly or indirectly associated with the axle 12, according to whether there is the gearbox 51 or not.

In particular such a hydromechanical clutch group 20 comprises a pack of discs 46 facing each other and alternatively connected to the first and second clutch group, in which such discs 46 are mobile to make contact with each other and to transmit, when indeed in contact, movement from the first to the second clutch group.

In other words, when the discs 46 alternatively facing each other and connected to the first and second clutch group make contact with each other, the movement coming from the shaft 23 is transmitted, possibly adapted by the gear box 51, to the wheels 13 and the power socket of the work tool 200 and 200'.

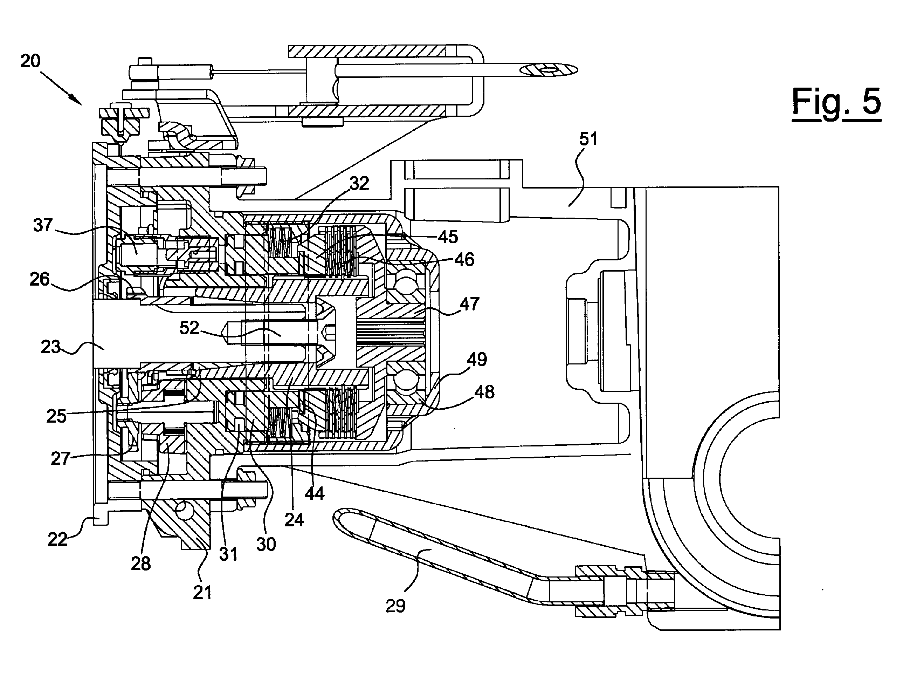

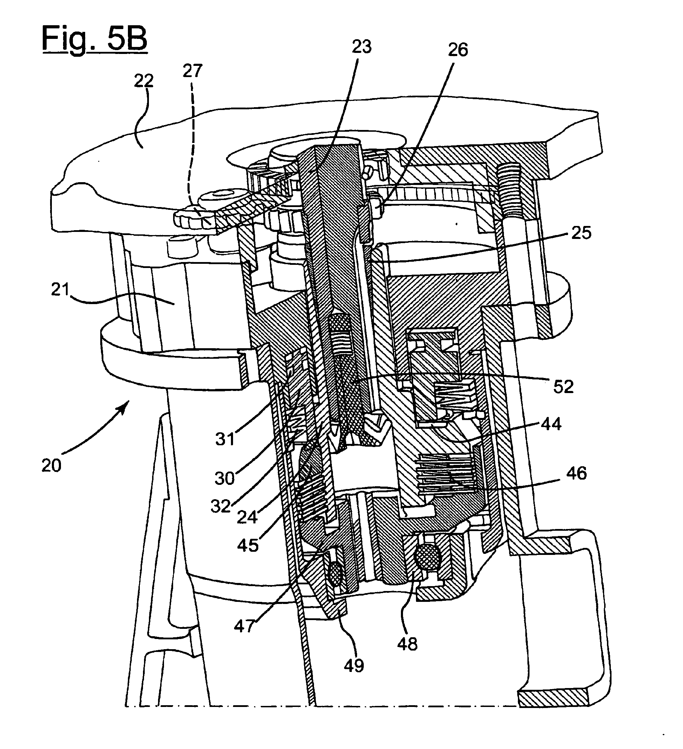

As can be seen in figures 5 and 5B the hydromechanical clutch group 20 comprises a mobile piston 30 which can be hydraulically controlled by the user by acting upon the first "safety" lever 16 as well as upon the second "clutch" lever.

Indeed such a mobile piston 30 is mobile between a first raised position, in which the discs 46 are decoupled, and a second lowered position in which the same discs 46 are coupled together.

The first clutch group of the hydromechanical clutch group 20, i.e. the group fixedly connected to the drive shaft 23, comprises a flange 21 associated with a portion 22 of the motor, a toothed hub 24 rigidly fitted, preferably through a screw 52, on the drive shaft 23 itself, and a taper bush 25, associated with the toothed hub 24, for dragging a first gear train 26.

Coupled with the first gear train 26 the first clutch group foresees a second gear train 27 which controls an oil pump 28 for injecting pressurized oil into the housing chamber of the piston 30.

Such an oil pump 28 is generally connected to an oil tank through a tube 29 possibly provided with a filter 29' and with a magnetic cap 30'.

Preferably the piston 30 is associated with sealing gaskets 31 and at least one pre-biased spring 32 which brings the piston 30 back into a raised starting position in which it does not block the discs 46 in a mutual contact.

According to a preferred embodiment the hydromechanical clutch group 20 comprises a thrust bearing 44 and a disc pusher 45 associated at the bottom with the piston 30, in which such a disc pusher 45 is mobile under the action of the piston 30 to compress the pack of discs 46 alternatively connected to the first and second clutch group.

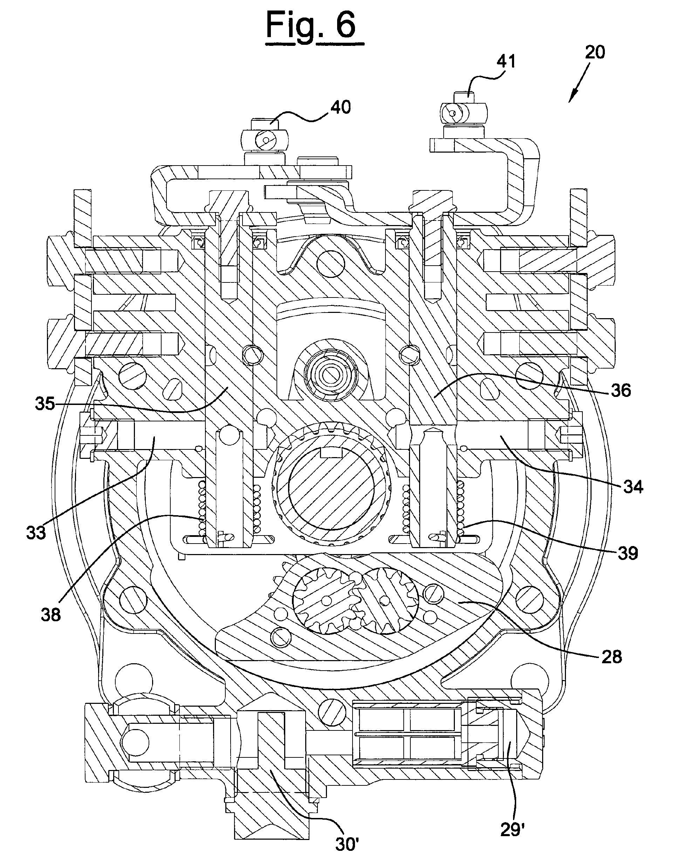

As shown in figure 5B the housing chamber of the piston 30 communicates, as well as with the pressurized oil delivery duct, with an exhaust through a maximum pressure valve 37 and two holes 33 34, shown in figure 6, selectively intercepted by two rotary, or in any case mobile, distributors 35 36.

In particular according to the present invention such two rotary distributors 35 36 are made to rotate respectively by the first "safety" lever 16 and the second "clutch" lever 17.

In particular such two rotary distributors 35 36 are associated with springs 38 39 and respectively connected to the second "clutch" lever 17 and to the first "safety" lever 16 and through two shafts 40 41 and flexible cables 42 43.

As can be seen in figure 6, the two springs 38 39 take care of bringing back the two rotary distributors 35 36 to a starting position so that a rotary distributor 35, associated with the second "clutch" lever 17, occupies the hole 33 whereas the rotary distributor 36, associated with the "safety" lever 16, frees the hole 34.

By actuating the "safety" lever 16 and the second "clutch" lever 17 a rotation of the respective rotary distributors 35 36 will be imposed in which the rotary distributor 35 associated with the second "clutch" lever 17 frees the hole 33, whereas the rotary distributor 36, associated with the "safety" lever 16, occupies the hole 34.

The second clutch group comprises a bell 47 fixedly connected to the axle 12, a bearing 48 associated with the bell 47 and a case 49 for the bearing 48.

Finally it is foreseen for there to be a mobile cam 51 is foreseen associated with the shaft 40 connected to the second "clutch" lever 17 of selective engagement of the shaft 41 connected to the first "safety" lever 16.

In particular such a mobile cam 51 is shaped so as to make it impossible to actuate the first "safety" lever 16 without holding the second "clutch" lever 17 in lowered position.

It is extremely simple to understand how the device object of the invention works.

The agricultural machine according to the present invention, according to what has previously been described, before its ignition has the following configuration.

The oil pump 28 is turned off, and therefore it does not inject pressurized oil into the chamber of the piston 30 and the springs 32, 38 and 39 respectively block the piston 30 in a raised position and the rotary distributors 35 36 being in a position such as to close the hole 33 and free the hole 34.

In particular the hole 33 associated with the second "clutch" lever 17 is closed whereas the hole 34 associated with the first "safety" lever 16 is open.

Following the ignition of the motor 11, the oil pump 28 takes care of injecting pressurized oil into the chamber of the piston 30 which however does not move from its aforementioned raised position due to the open hole 34 associated with the first "safety" lever 16 from where the oil just injected comes out.

To go ahead and move the machine the user must act in succession on the second "clutch" lever 17 and then on the first "safety" lever 16.

In this condition the oil pump 28 begins to inject pressurized oil into the chamber of the piston 30 whereas the hole 33 associated with the second "clutch" lever 17 is open and the hole 34 associated with the first "safety" lever 16 is closed.

Therefore also in this condition the machine 10, 10' does not move because the pressurized oil injected into the chamber of the piston 30 does not push the piston 30 itself due to the open hole 33 associated with first "clutch" lever 17 from which the oil just injected comes out.

From such a configuration by releasing the aforementioned first "clutch" lever 17, preferably gradually as in the normal use of cars and/or motor vehicles, the hole 33 will also be closed therefore forcing the oil to stay in the chamber of the piston 30.

At this point the pressure in the chamber of the piston 30 increases, in particular up to a value allowed by the relief valve 37, pushing the piston 30 downwards and putting in this way the discs 46 into contact.

Therefore in this condition, i.e. with the "clutch" lever 17 released and the "safety" lever 16 actuated, the movement is transmitted from the motor 11 to the wheels 13.

In order to proceed in actuating the gear shift 51 all that is needed is to act upon the "clutch" lever 17, change gear, and then release the "clutch" lever 17 itself always keeping the "safety" lever 16 actuated.

In the case in which the user, for whatever reason, releases the handlebar starting from the condition described above of the machine 10, 10' in movement, and then releases the "safety" lever 16, the spring 39 will make the corresponding rotary distributor 36 rotate to open the hole 34.

In such a configuration the pressurized oil contained in the chamber of the piston 30 will flow rapidly out of such a hole 34 reducing suddenly the pressure acting upon the piston 30 which will raise due to the spring 32 decoupling the contact between the discs 46.

By doing so, therefore, abandoning the handlebar completely stops the machine whilst the motor stays in motion.

Advantageously, the stopping of the machine is substantially instantaneous in respective of the connected inertia since the motor actually remains switched on.

Finally, in order to start working again after having released the handlebar, it is necessary to carry out a double action that consists of having to actuate the "clutch" lever 17 and then lower the "safety" lever 16.

Indeed, it is due to the cam 41 that it is not possible, with the machine stopped, either switched on or off, to act upon the "safety" lever 16 without having previously actuated the "clutch" lever 17.

The aforementioned controls, i.e. the "safety" lever 16 and the "clutch" lever 17, are advantageously easy to actuate and ergonomic, needing only to act upon a hydraulic distributor.

Finally, the foreseen oil bathed clutch allows better heat removal and more gradual couplings as well as making it unnecessary to increase the size of or make structural modifications to the machine that thus keeps all of its characteristics unchanged.

Indeed, there is no change in the arrangement and in the logic of the controls, which minimizes the risks connected with the lack of experience of the users.

It has thus been seen that an improved agricultural machine according to the present invention achieves the purposes highlighted earlier.

The improved agricultural machine of the present invention thus conceived is able to undergo numerous modifications and variants all of which are covered by the same inventive concepts; moreover, all of the details can be replaced by technically equivalent elements. In practise, the materials used, as well as their sizes, can be whatever according to the technical requirements.

## Claims

1. Agricultural machine (10, 10') comprising a motor (11) for delivering power, at least one axle (12) equipped with two wheels (13), a handlebar (14) and a power socket (15), said agricultural machine (10, 10') also comprising a clutch group (20) arranged between said motor (11) and said at least one axle (12) and a first and second control lever (16, 17) of said clutch group (20) associated with said handlebar (14), **characterized in that** said clutch group (20) is a hydromechanical clutch group (20) comprising a first clutch group associated with a drive shaft (23), a second clutch group associated with said axle (12) and a pack of discs (46) alternatively facing each other and connected to said first and second clutch group, said discs (46) being mobile to make contact with each other and to transmit movement from said first clutch group to said second clutch group, said hydromechanical clutch group (20) also comprising a mobile piston (30) hydraulically controlled by said first and second lever (16, 17), said mobile piston (30) being mobile between a first raised position, in which said discs (46) are decoupled, and a second lowered position in which said discs (46) are coupled.

2. Agricultural machine (10, 10') according to claim 1 **characterized in that** it comprises a gearbox (51) arranged between said hydromechanical clutch group (20) and said at least one axle (12).

3. Agricultural machine (10, 10') according to claim 1 **characterized in that** it comprises control means (50) of said motor (11) and of said gearbox at said handlebar (14).

4. Agricultural machine (10, 10') according to claim 1 **characterized in that** it comprises a tool (200, 200') associated with said power socket (15).

5. Agricultural machine (10, 10') according to claim 4 **characterized in that** said tool (200, 200') comprises a milling cutter (200) suitable for hoeing the ground, said agricultural machine (10, 10') being a tilling machine (10).

6. Agricultural machine (10, 10') according to claim 4 **characterized in that** said tool (200, 200') comprises mowing blades (200'), said agricultural machine (10, 10') being a mowing machine (10').

7. Agricultural machine (10, 10') according to claim 1 **characterized in that** said handlebar (14) can be orientated as desired with respect to said power socket (15).

8. Agricultural machine (10, 10') according to claim 1 **characterized in that** said first clutch group comprises a toothed hub (24) rigidly fitted through a screw (52) on a drive shaft (23), a taper bush (25) associated with said toothed hub (24) for dragging a first gear train (26), a second gear train (27) coupled with said first gear train (26), an oil pump (28) controlled by said second gear train (27) for injecting pressurized oil into a housing chamber of said first piston (30).

9. Agricultural machine (10, 10') according to claim 8 **characterized in that** said piston (30) is associated with sealing gaskets (31) and with preloaded pre-biased springs (32).

10. Agricultural machine (10, 10') according to claim 8 **characterized in that** said oil pump (28) is connected to a tank of said oil through a tube (29) equipped with a filter (29) and with a magnetic cap (30').

11. Agricultural machine (10, 10') according to claim 1 **characterized in that** said housing chamber of said piston (30) communicates with an exhaust through two holes (33) and (34), selectively intercepted by two rotary distributors (35) and (36) and through a maximum pressure valve (37), said two rotary or in any case mobile distributors (35) and (36) being made to rotate by said first and second lever (16, 17).

12. Agricultural machine (10, 10') according to claim 1 **characterized in that** said hydromechanical clutch group (20) comprises a thrust bearing (44) and a disc pusher (45) associated at the bottom with said piston (30), said disc pusher (45) being mobile under the action of said piston (30) to compress said pack of discs (46) alternatively connected to said first and second clutch group (24).

13. Agricultural machine (10, 10') according to claim 1 **characterized in that** said second clutch group comprises a bell (47) fixedly connected to said axle (12) a bearing (48), associated with said bell (47) and a case (49) for a bearing (48).

14. Agricultural machine (10, 10') according to claim 1 **characterized in that** said first clutch group comprises a flange (21) associated with a portion (22) of said motor.

15. Agricultural machine (10, 10') according to claim 12 **characterized in that** said two rotary distributors (35) and (36) are associated with springs (38) and (39) and connected to said first and second lever (16, 17) through two levers (40) and (41) and flexible cables (42) and (43).

16. Agricultural machine (10, 10') according to claim 15 **characterized in that** it comprises a mobile cam (51) associated with said lever (40) connected to said second selective engagement lever (17) of said lever (41) connected to said first lever (16).

## Patentansprüche

1. Landwirtschaftsmaschine (10, 10'), umfassend einen Motor (11) zur Kraftfreisetzung, mindestens eine mit zwei Rädern (13) versehenen Achse (12), eine Lenkstange (14) und eine Steckdose (15), wobei die Landwirtschaftsmaschine (10, 10') außerdem eine Kupplungsgruppe (20), angeordnet zwischen dem Motor (11) und mindestens einer Achse (12), sowie einen ersten und einen zweiten Schalthebel (16, 17) der Kupplungsgruppe (20) umfasst, die der Lenkstange (14) angegliedert sind, **dadurch gekennzeichnet, dass** die Kupplungsgruppe (20) eine hydromechanische Kupplungsgruppe (20) ist, umfassend eine erste Kupplungsgruppe, die einer Getriebewelle (23) angegliedert ist, eine zweite Kupplungsgruppe, die der Achse (12) angegliedert ist, sowie ein Paket von Scheiben (46), die sich abwechslungsweise gegenüberliegen und mit der ersten und zweiten Kupplungsgruppe verbunden sind, wobei die Scheiben (46) beweglich sind, um miteinander in Kontakt zu kommen und die Bewegung von der ersten Kupplungsgruppe auf die zweite Kupplungsgruppe zu übertragen, wobei die hydromechanische Kupplungsgruppe (20) außerdem einen beweglichen Kolben (30) umfasst, der vom ersten und vom zweiten Hebel (16, 17) hydraulisch gesteuert wird, wobei sich der Kolben (30) zwischen einer ersten angehobenen Position, in der die Scheiben (46) entkuppelt sind, und einer zweiten abgesenkten Position, in der die Scheiben (46) gekuppelt sind, bewegen kann.

2. Landwirtschaftsmaschine (10, 10') nach Anspruch 1, **dadurch gekennzeichnet, dass** sie einen Getriebekasten (51) umfasst, der zwischen der hydromechanischen Kupplungsgruppe (20) und mindestens einer Achse (12) angeordnet ist.

3. Landwirtschaftsmaschine (10, 10') nach Anspruch 1, **dadurch gekennzeichnet, dass** sie Steuermittel (50) für den Motor (11) und den Getriebekasten an der Lenkstange (14) umfasst.

4. Landwirtschaftsmaschine (10, 10') nach Anspruch 1, **dadurch gekennzeichnet, dass** sie ein Werkzeug (200, 200') umfasst, das der Steckdose (15) angegliedert ist.

5. Landwirtschaftsmaschine (10, 10') nach Anspruch 4, **dadurch gekennzeichnet, dass** das Werkzeug (200, 200') einen Fräser (200) zum Hacken des Bodens umfasst, wobei die Landwirtschaftsmaschine (10, 10') eine Bestellmaschine (10) ist.

6. Landwirtschaftsmaschine (10, 10') nach Anspruch 4, **dadurch gekennzeichnet, dass** das Werkzeug (200, 200') einen Mähbalken (200') umfasst, wobei die Landwirtschaftsmaschine eine Mähmaschine (10') ist.

7. Landwirtschaftsmaschine (10, 10') nach Anspruch 1, **dadurch gekennzeichnet, dass** die Lenkstange (14) nach Wunsch bezüglich der Steckdose (15) ausgerichtet werden kann.

8. Landwirtschaftsmaschine (10, 10') nach Anspruch 1, **dadurch gekennzeichnet, dass** die erste Kupplungsgruppe eine gezahnte Nabe (24), die durch eine Schraube (52) starr auf der Antriebswelle (23) befestigt ist, eine Spannbuchse (25), die der gezahnten Nabe (24) zum Ziehen eines ersten Getriebezuges (26) angegliedert ist, einen zweiten Getriebezug (27), der mit dem ersten Getriebezug (26) gekuppelt ist, sowie eine Ölpumpe (28) umfasst, die durch den zweiten Getriebezug (27) zum Einspritzen des druckbeaufschlagten Öls in die Gehäusekammer des ersten Kolbens (30) gesteuert wird.

9. Landwirtschaftsmaschine (10, 10') nach Anspruch 8, **dadurch gekennzeichnet, dass** der Kolben (30) Dichtungen (31) und vorgespannten Federn (32) angegliedert ist.

10. Landwirtschaftsmaschine (10, 10') nach Anspruch 8, **dadurch gekennzeichnet, dass** die Ölpumpe (28) mit einem Öltank mittels eines Rohres (29) verbunden ist, das mit einem Filter (29) und mit einer magnetischen Kappe (30') ausgestattet ist.

11. Landwirtschaftsmaschine (10, 10') nach Anspruch 1, **dadurch gekennzeichnet, dass** die Gehäusekammer des Kolbens (30) durch zwei Löcher (33) und (34), die wahlweise durch zwei Rotationsverteiler (35) und (36) unterbrochen werden, sowie durch ein Druckbegrenzungsventil (37) mit einem Auspuff in Verbindung steht, wobei die beiden Rotations- oder in jedem Fall beweglichen Verteiler (35) und (36) durch den ersten und den zweiten Hebel (16, 17) in Rotation versetzt werden.

12. Landwirtschaftsmaschine (10, 10') nach Anspruch 1, **dadurch gekennzeichnet, dass** die hydromechanische Kupplungsgruppe (20) ein Drucklager (44) und einen Scheibendrücker (45) umfasst, der an der Unterseite dem Kolben (30) angegliedert ist, wobei der Scheibendrücker (45) durch Einwirkung des Kolbens (30) bewegt wird, um das Paket von Scheiben (46) zusammenzudrücken, die mit der ersten beziehungsweise mit der zweiten Kupplungsgruppe (24) verbunden sind.

13. Landwirtschaftsmaschine (10, 10') nach Anspruch 1, **dadurch gekennzeichnet, dass** die zweite Kupplungsgruppe einen Verschlusskegel (47), der fest mit der Achse (12) verbunden ist, ein Lager (48), das mit dem Verschlusskegel (47) verbunden ist, sowie ein Gehäuse (49) für das Lager (48) umfasst.

14. Landwirtschaftsmaschine (10, 10') nach Anspruch 1, **dadurch gekennzeichnet, dass** die erste Kupplungsgruppe einen Flansch (21) umfasst, der mit einem Teil (22) des Motors verbunden ist.

15. Landwirtschaftsmaschine (10, 10') nach Anspruch 12, **dadurch gekennzeichnet, dass** die beiden Rotationsverteiler (35) und (36) Federn (38) und (39) angegliedert sind und durch zwei Hebel (40) und (41) sowie durch flexible Kabel (42) und (43) mit dem ersten und dem zweiten Hebel (16, 17) verbunden sind.

16. Landwirtschaftsmaschine (10, 10') nach Anspruch 15, **dadurch gekennzeichnet, dass** sie eine bewegliche Nocke (51) umfasst, die dem Hebel (40) angegliedert ist, der mit dem zweiten, wahlweisen Einrückhebel (17) des Hebels (41) verbunden ist, der mit dem ersten Hebel (16) verbunden ist.

## Revendications

1. Machine agricole (10, 10') comprenant un moteur (11) pour fournir une puissance, au moins un essieu (12) équipé de deux roues (13), un mancheron (14) et une prise de force (15), ladite machine agricole (10, 10') comprenant également un groupe d'embrayage (20) disposé entre ledit moteur (11) et ledit au moins un essieu (12) et un premier et un deuxième levier de commande (16, 17) dudit groupe d'embrayage (20), associés audit mancheron (14), **caractérisée en ce que** ledit groupe d'embrayage (20) est un groupe d'embrayage hydromécanique (20) comprenant un premier groupe d'embrayage associé à un arbre de transmission (23), un deuxième groupe d'embrayage associé audit essieu (12) et un paquet de disques (46) faisant face alternativement l'un avec l'autre et connectés auxdits premier et deuxième groupes d'embrayage, lesdits disques (46) étant mobiles pour venir en contact l'un avec l'autre et pour transmettre le mouvement dudit premier groupe d'embrayage audit deuxième groupe d'embrayage, ledit groupe d'embrayage hydromécanique (20) comprenant également un piston mobile (30) commandé hydrauliquement par lesdits premier et deuxième leviers de commande (16, 17), ledit piston mobile (30) étant mobile entre une première position soulevée, dans laquelle lesdits disques (46) sont désaccouplés, et une deuxième position abaissée, dans laquelle lesdits disques (46) sont couplés.

2. Machine agricole (10, 10') selon la revendication 1, **caractérisée en ce qu'**elle comprend une boîte de transmission (51) disposée entre ledit groupe d'embrayage hydromécanique (20) et ledit au moins un essieu (12).

3. Machine agricole (10, 10') selon la revendication 1, **caractérisée en ce qu'**elle comprend des moyens de commande (50) dudit moteur (11) et de ladite boîte de transmission au niveau dudit mancheron (14).

4. Machine agricole (10, 10') selon la revendication 1, **caractérisée en ce qu'**elle comprend un outil (200, 200') associé à ladite prise de force (15).

5. Machine agricole (10, 10') selon la revendication 4, **caractérisée en ce que** ledit outil (200, 200') comprend une fraise (200) adapté pour biner le sol, ladite machine agricole (10, 10') étant une machine défricheuse (10).

6. Machine agricole (10, 10') selon la revendication 4, **caractérisée en ce que** ledit outil (200, 200') comprend des lames de fauchage (200'), ladite machine agricole (10, 10') étant une machine faucheuse (10').

7. Machine agricole (10, 10') selon la revendication 1, **caractérisée en ce que** ledit mancheron (14) peut être orienté comme désiré par rapport à ladite prise de force (15).

8. Machine agricole (10, 10') selon la revendication 1, **caractérisée en ce que** ledit premier groupe d'embrayage comprend un manchon denté (24) fixé rigidement par une vis (52) sur un arbre de transmission (23), une douille conique (25) associée audit manchon denté (24) pour entraîner un premier train d'engrenages (26), un deuxième train d'engrenages (27) couplé audit premier train d'engrenages (26), une pompe à huile (28) commandée par ledit deuxième train d'engrenages (27) pour injecter de l'huile sous pression dans une chambre de logement dudit premier piston (30).

9. Machine agricole (10, 10') selon la revendication 8, **caractérisée en ce que** ledit piston (30) est associé à des joints d'étanchéité (31) et à des ressorts pré-sollicités et pré-chargés (32).

10. Machine agricole (10, 10') selon la revendication 8, **caractérisée en ce que** ladite pompe à huile (28) est reliée à un réservoir de ladite huile par le biais d'un tube (29) équipé d'un filtre (29) et avec un bouchon magnétique (30').

11. Machine agricole (10, 10') selon la revendication 1, **caractérisée en ce que** ladite chambre de logement dudit piston (30) communique avec un échappement à travers deux orifices (33) et (34), sélectivement interceptés par deux distributeurs rotatifs (35) et (36) et par le biais d'une soupape de pression maximale (37), lesdits deux distributeurs rotatifs ou en tous cas mobiles (35) et (36) étant conçus pour être tournés par lesdits premier et deuxième leviers (16, 17).

12. Machine agricole (10, 10') selon la revendication 1, **caractérisée en ce que** ledit groupe d'embrayage hydromécanique (20) comprend un palier de butée (44) et un pousseur de disques (45) associé au niveau du fond audit piston (30), ledit pousseur de disques (45) étant mobile sous l'action dudit piston (30) pour comprimer ledit paquet de disques (46) connecté alternativement auxdits premier et deuxième groupes d'embrayage (24).

13. Machine agricole (10, 10') selon la revendication 1, **caractérisée en ce que** ledit deuxième groupe d'embrayage comprend une cloche d'embrayage (47) connecté de manière fixe audit essieu (12), un palier (48) associé à ladite cloche d'embrayage (47) et un logement (49) pour un palier (48).

14. Machine agricole (10, 10') selon la revendication 1, **caractérisée en ce que** ledit premier groupe d'embrayage comprend une bride (21) associée à une portion (22) dudit moteur.

15. Machine agricole (10, 10') selon la revendication 12, **caractérisée en ce que** lesdits deux distributeurs rotatifs (35) et (36) sont associés à des ressorts (38) et (39) et connectés audit premier et audit deuxième levier (16, 17) par l'intermédiaire de deux leviers (40) et (41) et de câbles flexibles (42) et (43).

16. Machine agricole (10, 10') selon la revendication 15, **caractérisée en ce qu'**elle comprend une came mobile (51) associée audit levier (40) connecté audit deuxième levier d'engagement sélectif (17) dudit levier (41) connecté audit premier levier (16).
